# EUROPÄISCHE PATENTSCHRIFT

(11) **EP 1 881 202 B1**
(45) Veröffentlichungstag und Bekanntmachung des Hinweises auf die Patenterteilung: **28.10.2015**
(21) Anmeldenummer: 07111006.8
(22) Anmeldetag: 26.06.2007
(51) Int. Cl.: F04D 29/32, F04D 29/02

(54) **Verfahren zur Reparatur eines in BLISK-Bauweise ausgeführten Verdichterrotors**
Method for repairing a compressor rotor in blisk design
Procédé destiné à la réparation d'un rotor de compresseur réalisé dans une construction BLISK

(30) Priorität: 17.07.2006 DE 102006033299
(43) Veröffentlichungstag der Anmeldung: 23.01.2008
(73) Patentinhaber: Rolls-Royce Deutschland Ltd & Co KG, 15827 Blankenfelde-Mahlow (DE)
(72) Erfinder: Haubold, Thomas, 61273, Wehrheim (DE); Berkenhoff, Claudia, 61273 Wehrheim (DE)
(74) Vertreter: Kronthaler, Wolfgang N.K.

(56) Entgegenhaltungen:
- EP-A2- 1 153 699
- DE-A1-102004 002 965
- US-A1- 2005 186 080

## Beschreibung

Die Erfindung betrifft ein Verfahren zur Reparatur eines in BLISK-Bauweise ausgeführten Verdichterrotors, bestehend aus einstückig miteinander verbundenen BLISKs, bei dem eine stark beschädigte Stufe gegen eine neue ausgetauscht und der Rotor anschließend wärmebehandelt wird.

Bei Gasturbinentriebwerken werden bekanntermaßen Verdichter eingesetzt, die aus mehreren einstückig miteinander verbundenen, jeweils als BLISK ausgeführten Rotorstufen bestehen, die jeweils eine Scheibe mit integral angeformten Schaufeln umfassen. Stark beschädigte einzelne Schaufeln oder Schaufelteile werden üblicherweise abgetrennt und durch neue, in einem Schweißprozess befestigte Ansatzstücke ersetzt (siehe dazu z.B. EP 1153699). Zur Verminderung der in dem schweißnahtnahen Bereich erzeugten Spannungen wird eine Wärmebehandlung erforderlich, bei der die gesamte Verdichtertrommel oder nur der die Eigenspannungen aufweisende Schweißnahtbereich der reparierten Schaufel behandelt wird. Bei der vollständigen Wärmebehandlung des Verdichters kann dieser verformt werden, so dass eine aufwändige mechanische Nachbearbeitung erforderlich ist. Außerdem müssen zuvor entfernte Beschichtungen wieder aufgebracht und eine erneute Oberflächenverfestigung durchgeführt werden. Zur Durchführung einer auf den jeweiligen Schweißnahtbereich begrenzten lokalen Wärmebehandlung sind aufwändige Kapseltechniken bekannt, die eine Erwärmung der nicht beschädigten Teile der BLISK verhindern.

Da der Reparaturaufwand bei stark beschädigten Verdichtern in Verbindung mit einer lokalen Wärmebehandlung besonders hoch ist, werden in diesem Fall eine oder auch mehrere der miteinander verschweißten BLISKs aus dem Verdichter heraus- bzw. von diesem abgetrennt und durch eine neue, mittels einer Schweißverbindung eingefügte BLISK ersetzt. In diesem Fall muss jedoch der aus mehreren miteinender verschweißten BLISKs zusammengesetzte Verdichter einer Wärmebehandlung in einem Ofen unterzogen werden, bei der die oben angegebenen Nachteile auftreten.

Der Erfindung liegt die Aufgabe zugrunde, den Arbeitsaufwand bei der Reparatur von stark beschädigten Verdichtern spürbar zu senken.

Erfindungsgemäß wird die Aufgabe mit einem Verfahren gemäß den Merkmalen des Patentanspruchs 1 gelöst. Zweckmäßige Weiterbildungen der Erfindung ergeben sich aus den Unteransprüchen.

Der Grundgedanke der Erfindung besteht darin, dass eine anstelle der zerstörten BLISK vorgesehene neue BLISK durch Elektronenstrahlschweißen mit dem Verdichterrotor verbunden wird und die Schweißnaht sowie die durch die Schweißwärme beeinflussten begrenzten benachbarten Bereiche zum Spannungsarmglühen mittels durch Induktion erzeugter Wärme behandelt werden. Die Induktionsparameter können so eingestellt werden, dass der zur Wärmeerzeugung in dem Bauteil induzierte Strom tatsächlich auf den Schweißnahtbereich beschränkt ist und nur dort die zum Spannungsarmglühen erforderliche Temperatur erzeugt wird. Eine auf dem Verdichterrotor vorhandene Beschichtung muss vor der Wärmebehandlung nicht entfernt und somit später auch nicht erneut aufgebracht werden. Gleichermaßen entfällt eine erneute Behandlung zur Oberflächenhärtung der Schaufeln. Schließlich kann der Verzug des Rotors durch die örtlich begrenzte Wärmebehandlung minimiert werden, so dass auch die ansonsten erforderliche aufwändige mechanische Nachbearbeitung nicht mehr oder nur in geringerem Umfang notwendig ist. Aufgrund der örtlichen begrenzten Wärmeerzeugung kann das Reparaturverfahren häufiger wiederholt werden. Die für die Wärmebehandlung erforderliche Wärme wird lokal umlaufend entlang der Schweißnaht erzeugt.

Das Verfahren eignet sich nicht nur zur Reparatur eines Blisk Rotors, sondern kann auch in der Herstellung verwendet werden. Vorteil dabei ist, dass die kostenintensive Wärmebehandlung im Ofen ersetzt werden kann, die lokale Wärmebehandlung schneller ist und sogar in den Schweißprozeß integriert werden kann.

Die Erfindung wird in einem Ausführungsbeispiel näher erläutert.

Bei einem Verdichter, dessen Rotor aus miteinander verbundenen BLISKs besteht und bei dem eine Vielzahl von Schaufeln in einer Stufe beschädigt ist, wird die betreffende BLISK aus der Verdichtertrommel herausgetrennt und durch eine neue Scheibe mit integral angeformten Schaufeln (BLISK) ersetzt, die durch Elektronenstrahlschweißen mit der Verdichtertrommel verbunden wird. Nach dem Verschweißen der Ersatzblisk mit der Verdichterrotor werden lediglich die Schweißnaht und der an diese während des Schweißvorgangs stark erwärmte angrenzende Bereich einer örtlichen Wärmebehandlung durch induktive Erwärmung unterzogen, indem mit einem am Umfang der Verbindungsstelle erzeugten Magnetfeld in der Schweißnaht und einem begrenzten beidseitigen Bereich des Rotors ein Strom induziert und dadurch die für die Wärmebehandlung erforderliche Temperatur des Werkstoffs erzeugt wird. Die Parameter für die lokal begrenzte Wärmebehandlung können gut eingestellt werden, so dass sich der Kompressorrotor insgesamt geringfügig verzieht und eine durch Verziehen infolge Wärmeeinfluss bedingte Nachbearbeitung nicht oder nur im geringen Umfang erforderlich ist. Es entfällt ebenfalls eine nach der Wärmebehandlung des gesamten Rotors in einem Wärmebehandlungsofen erneut notwendige Oberflächenbeschichtung und/oder die Wiederholung einer Oberflächenhärtung, beispielsweise durch Kugelstrahlen der nicht lokal wärmebehandelten Bereiche. Nach der Wärmebehandlung erfolgt eine Prüfung der Schweißverbindung und gegebenenfalls eine mechanische Nachbearbeitung im Nahtbereich.

## Patentansprüche

1. Verfahren zur Reparatur eines in BLISK-Bauweise ausgebildeten Verdichterrotors, bestehend aus einstuckig miteinander verbundenen BLISKs, bei dem eine stark beschadigte Stufe gegen eine neue ausgetauscht und der Rotor anschließend warmebehandelt wird, **dadurch gekennzeichnet, dass** die neue BLISK durch Elektronenstrahlschweißen mit dem Rotor verbunden wird und lediglich die Verbindungsstelle sowie ein an diese angrenzender, durch die Schweißwarme beeinflusster Bereich einer lokalen Warmebehandlung mittels eines in diesem durch elektromagnetische Induktion induzierten Stroms unterzogen wird.

2. Verfahren nach Anspruch 1, **dadurch gekennzeichnet, dass** die Warmebehandlung lokal umlaufend entlang der Verbindungsstelle erfolgt.

3. Verfahren nach Anspruch 1, **dadurch gekennzeichnet, dass** die Verbindungsstelle gepruft und gegebenenfalls mechanisch bearbeitet wird.

4. Verfahren nach Anspruch 1, **dadurch gekennzeichnet, dass** die Warmebehandlung auch in der Herstellung der Blisk-Rotoren genutzt werden kann.

5. Verfahren nach Anspruch 1, **dadurch gekennzeichnet, dass** die Warmebehandlung auch in der Herstellung der konventionellen Rotoren genutzt werden kann.

## Claims

1. Method for repairing a compressor rotor in a blisk-type design embodiment, comprising blisks that are connected to one other in one piece, in which a strongly damaged stage is replaced with a new one and the rotor is subsequently subjected to heat treatment, **characterized in that** the new blisk is connected to the rotor by means of electron-beam welding, and **in that** only the connection area as well as an area that is adjoining the same and is affected by the welding heat are subjected to a local heat treatment by means of a current that is induced **in that** area by means of electromagnetic induction.

2. Method according to claim 1, **characterized in that** the heat treatment is effected in a locally circumferential manner along the connection area.

3. Method according to claim 1, **characterized in that** the connection area is examined and , if required, mechanically processed.

4. Method according to claim 1, **characterized in that** the heat treatment can also be used in manufacturing the blisk rotors.

5. Method according to claim 1, **characterized in that** the heat treatment can also be used in manufacturing the conventional rotors.

## Revendications

1. Procédé destiné à la réparation d'un rotor de compresseur dans une construction BLISK, composée de plusieurs BLISK monopièces reliés entre eux, au cours duquel un étage fortement endommagé est remplacé par un neuf, après quoi le rotor est soumis à un traitement thermique, **caractérisé en ce que** le nouveau BLISK est relié au moteur par soudage par faisceau d'électrons et que seul le point de soudage, ainsi qu'une zone avoisinant ce dernier exposée à la chaleur produite par le soudage, est soumis à un traitement thermique local au moyen d'un courant induit dans ce dernier par induction électromagnétique.

2. Procédé selon la revendication 1, **caractérisé en ce que** le traitement thermique est réalisé de façon localisée le long du pourtour du point de soudage.

3. Procédé selon la revendication 1, **caractérisé en ce que** le point de soudage est inspecté et, au besoin, traité mécaniquement.

4. Procédé selon la revendication 1, **caractérisé en ce que** le traitement thermique peut également être utilisé lors de la production des rotors de BLISK.

5. Procédé selon la revendication 1, **caractérisé en ce que** le traitement peut également être utilisé lors de la production des rotors conventionnels.
